# EUROPEAN PATENT APPLICATION

(11) **EP 1 487 206 A2**
(43) Date of publication of application: **15.12.2004**
(21) Application number: 04102138.7
(22) Date of filing: 14.05.2004
(51) Int. Cl.: H04N 5/765, H04N 5/44

(54) **TV receiver module for computers**

(30) Priority: 12.06.2003 KR 2003038002
(71) Applicant: Samsung Electronics Co., Ltd., Suwon-si Gyeonggi-do 442-742 (KR)
(72) Inventor: Lee, Kwang-yong, Paldal-ku, Suwon city, Kyungki-do (KR)
(74) Representative: Read, Matthew Charles

(57) **Abstract**

A TV signal receiving module and method thereof is connected to a portable computer through a USB (ul bus) connector or a USB external connection terminal, and includes a tuner, a video decoder, an audio decoder, an encoding engine, and a network connecting part. The tuner receives an analogue or a digital signal and separates the analogue signal into a video signal and an audio signal and converting the digital signal into a first data stream. The video decoder converts the video signal of the analogue signal into a digital video stream. The audio decoder converts the audio signal of the analogue into a digital audio stream. The encoding engine encodes the digital video and audio streams into a second data stream. The network connecting part converts a format of the first data stream or the second data stream for the portable computer.

## Description

The present invention relates to a TV signal receiving module for a computer.

A TV card is a type of TV signal receiving module and is employed in a computer system, particularly in a personal computer, to allow a user to watch TV.

Analogue TV/PVR (personal video recorder) cards convert analogue NTSC, PAL or SECAM TV signals, received through an antenna, into digital signals and transmit the digital signals to their host computer systems through PCI (peripheral component interconnect) buses, so that the digital signals can be displayed on the computers' screens or monitors.

Similarly, digital TV cards converts ATSC or DVB digital television signals into digital signal suitable for transmission to a host computer system via a PCI bus.

Since these TV cards are PCI devices, they must be inserted into PCI slots while the host computer is off. In other words, they are not Hot-Plug devices.

Furthermore, the trend in the reduction of the sizes of computer motherboards means that it is becoming increasingly difficult to install TV cards.

A module, according to the present invention, is characterised in that the module has a hot-plug supporting interface, e.g. a USB interface, for connecting it to a host computer.

Preferably, the module includes both digital and analogue TV signal receiving means. If the interfaces is a USB interface, respective USB controllers may be provided for analogue and digital TV reception.

A USB hub may be included with the outputs of said USB controllers connected to the USB hub.

The module may be configured for installation in a component bay of a portable computer.

Additional preferred and optional features of the present invention are set forth in claim 8 to 36 appended hereto.

An embodiment of the present invention will now be described, by way of example, with reference to the accompanying drawings, in which:
Figure 1 is a block diagram of a TV signal receiving module, according to the present invention;
Figure 2 illustrates the configuration of the TV signal receiving module shown in Figure 1;
Figure 3 is a perspective view of the TV signal receiving module of Figure 2;
Figure 4A illustrates the TV signal receiving module mounted within a portable computer; and
Figure 4B illustrates the TV signal receiving module connected to a portable computer by a cable.

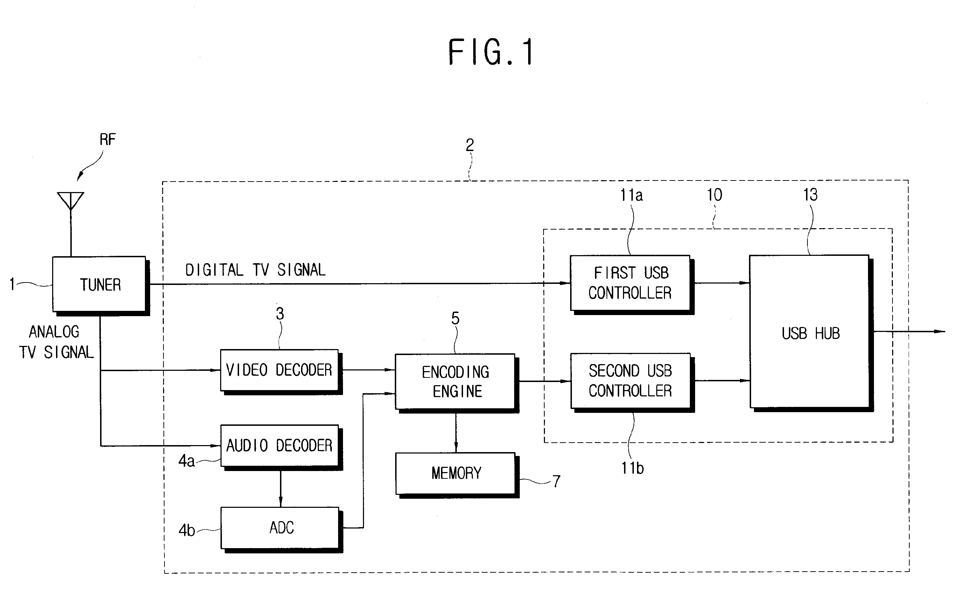

Referring to Figure 1, a TV signal receiving module includes a tuner 1 and a TV signal processing module 2, which includes a video decoder 3, an encoding engine 5, a memory 7 and a network connecting part 10 including a first USB (universal serial bus) controller 11a, a second USB controller 11b and a USB hub 13. The TV signal receiving module further includes an audio decoder 4a and an ADC (analogue-to-digital converter) 4b.

The video decoder 3, the audio decoder 4a, the ADC 4b and the encoding engine 5 are employed to decode and digitise the video and audio components of a received analogue TV signal to provide a digital signal suitable for a portable, or other, computer.

The tuner 1 is an ATSC/NTSC or DVB/PAL compatible tuner. ATSC (Advanced Television System Committee) and DVB (Digital Television Broadcasting) are digital television standards, and NTSC (National Television Standards Committee) and PAL (Phase Alternate Lines) are analogue television standards. The tuner 1 supports both analogue and digital television standards.

In the case of NTSC or PAL, the tuner 1 separates the analogue TV signal into video and audio signals and converts the video and audio signals into a CVBS (composite video burst sync) signal and a sound IF (intermediate frequency) signal, respectively.

The tuner 1 transmits the CVBS signal as the video signal to the video decoder 3, and the sound IF signal as the audio signal to the audio decoder 4a.

The video decoder 3 converts the CVBS signal received from the tuner 1 into a digital video stream "CCIR656," and transmits the digital video stream "CCIR656" to the encoding engine 5. The encoding engine 5 may be an MPEG (moving picture experts group)-2 encoder.

The audio decoder 4a converts the sound IF signal, received from the tuner 1, into a digital audio stream "I²S," and transmits the digital audio stream "I²S" to the encoding engine 5 through the ADC 4b.

The encoding engine 5 encodes the digital video and audio streams, received from the video and audio decoders 3, 5 respectively, into a first data stream, which is, in this example, a MPEG-2 program stream for efficient storage.

The memory 7 is employed as a storage unit to store picture information.
Therefore, the digital video and audio streams, encoded by the encoding engine 5, are stored in the memory 7. The picture information is transmitted to a graphic card (not shown) by the host computer, thereby displaying the picture on the computer's screen or monitor.

Thus, in the case of the NTSC or PAL, the analogue TV signal is encoded into an MPEG-2 program stream through the video decoder 3, the audio decoder 4a, the ADC 4b and the encoding engine 5, and then transmitted to the second USB controller 11b.

In the case of ATSC or DVB, the digital TV signal is converted into a second data stream, which is this example is an MPEG-2 transport stream, in the tuner 1 and then directly transmitted to the first USB controller 11a.

The first USB controller 11a converts the second data stream into a format compatible with USB and the second USB controller 11b converts the first data stream into a format compatible with USB.

The received TV signal is output by the first or second USB controller 11a, 11b, according to whether it was analogue or digital, via a USB connector.

Separate USB terminals may be provided for the first and second USB controllers 11a, 11b. However, in the present example, the outputs of the first and second USB controllers 11a, 11b are connected to respective inputs of a USB hub 13 so that they can share a single USB connector.

The video decoder 3, the audio decoder 4a, the ADC 4b, the encoding engine 5, the first USB controller 11a, the second USB controller 11b, and the USB hub 13 are implemented using one or more integrated circuits.

The TV signal receiving module, described above, can receive both the analogue TV signal of the NTSC and the digital TV signal of the ATSC. Therefore, a user can select either of the NTSC or the ATSC, and only the selected TV signal is displayed.

Because the TV signal receiving module is connected to the portable, or other, computer using a USB interface, and not through a PCI interface, the TV signal receiving module can be connected to and recognized by the portable, or other, computer while the computer is operating.

The TV signal receiving module can be readily connected to a portable computer without being inserted into a slot of a motherboard and is not limited to a board shape corresponding to the slot and may be designed in various shapes.

Due to the easy connection between the TV signal receiving module and the portable computer, the TV signal receiving module may be designed to be internally mounted into the battery bay in a portable computer.

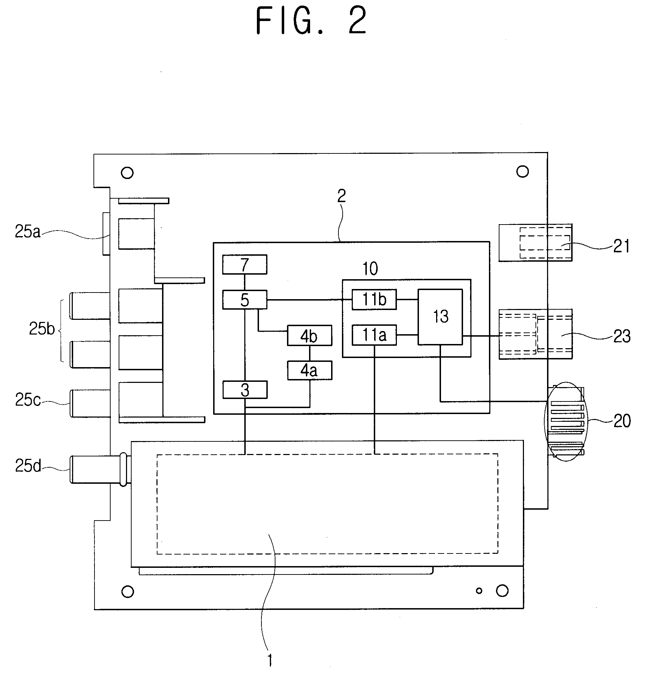

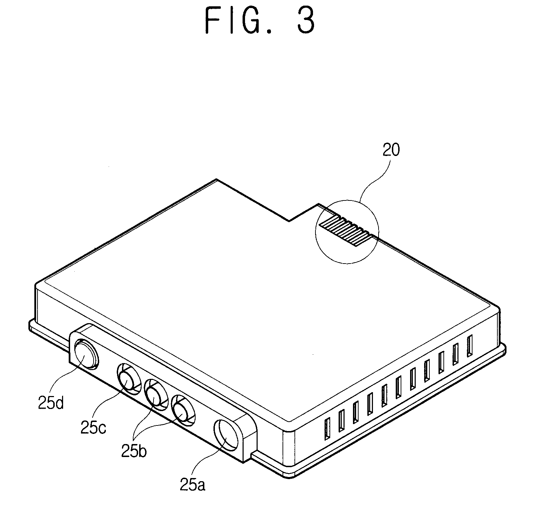

Referring to Figures 2 and 3, the TV signal receiving module has an external shape suitable for being mounted in the battery bay of a portable computer.

The module may be shaped to fit snugly into the battery bay of a particular type of portable computer or may be sized so that it can be received in the battery bays of a plurality of different types of portable computer.

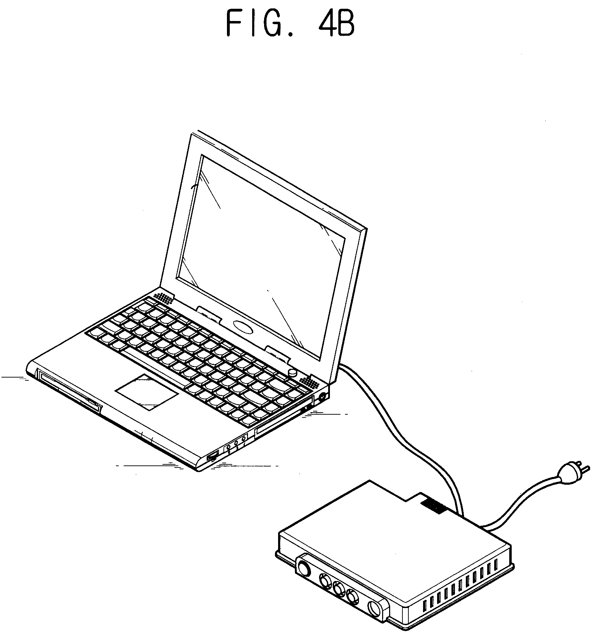

A connector 20, a power input terminal 21, and an external connection terminal 23 are provided on one side of the TV signal receiving module. The connector 20 is directly connected to a USB port that is disposed in the bottom of the portable computer, adjacent to a connector to which a battery can be connected. Electric power is supplied through the power input terminal 21 to components of the TV signal receiving module (i.e., a tuner 1, a video decoder 3, an encoding engine 5, a memory 7, and a network connecting part 10). The external connection terminal 23 may be connected to a USB port that is disposed in the back of the portable computer through a cable or the like (refer to Figure 4B).

A plurality of input terminals including an S-video input terminal 25a, two stereo terminals 25b for the audio signal, a video input terminal 25c and a TV signal receiving socket 25d, connected to the tuner 1, are provided on the other side of the TV signal receiving module 2.

The TV signal processing module 2, excluding the tuner 1 from the TV signal receiving module, is connected to the tuner 1 so as to input analogue TV signals, received through the tuner 1, to the video and audio decoders 3 and 4a, and to transmit a digital TV signals, received through the tuner 1, to the first USB controller 11a.

Furthermore, the video decoder 3 is connected to the S-video input terminal 25a and the video input terminal 25c.

The disposition of the chips of the TV signal processing module 2 is not limited to that shown in Figure 2 and can be varied as long as the above described connection is kept.

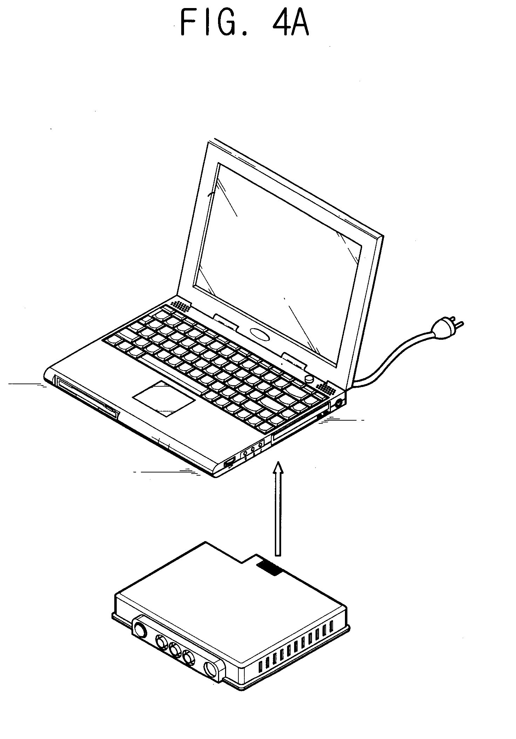

As shown in Figure 4A, the connector 20 is used as a connection terminal to mount the TV signal receiving module to the portable computer. Also, in the bottom of the portable computer, a module connection terminal to which the connector 20 is connected is also provided. The module connection terminal corresponding to the connector 20 corresponds to the connector of a battery that is configured for installation in the battery bay.

On the other hand, in the case that the TV signal receiving module is mounted to the battery mounting place of the portable computer instead of the battery, the portable computer may receive the electric power from a commercial AC (alternating current) power source because the battery is not connected thereto.

As shown in Figure 4A, because the TV signal receiving module is mounted to the bottom of the portable computer, it is not easy to supply the electric power through the power input terminal 21. In this case, a plurality of pins of the connector 20 are partly connected to the USB port of the portable computer and partly connected to a power pin of the portable computer.

As shown in Figure 4B, the external connection terminal 23 is used when the TV signal receiving module is connected to the USB port of the portable computer through the cable or the like. In this case, the portable computer can receive the electric power from the battery as well as the commercial AC power source. At this time, the TV signal receiving module may receive the electric power from the commercial AC power source through the power input terminal 21.

As described above, there is a TV signal receiving module and a portable computer having the same, in which the TV signal receiving module can be used for both an analogue TV signal of NTSC and a digital TV signal of ATSC.

Furthermore, there is a TV signal receiving module and a portable computer having the same, in which the TV signal receiving module is connected to the portable computer, not through a PCI interface, but through a USB, so that the TV signal receiving module can be connected to and recognized by the portable computer while the portable computer operates.

Furthermore, there is a TV signal receiving module and a portable computer having the same, in which the TV signal receiving module can be readily connected to the portable computer without being inserted in a slot of a main board. Accordingly, the TV signal receiving module is not limited to a board shape corresponding to the slot, and can be designed in various shapes, particularly, the TV signal receiving module can be designed to be internally mounted to a battery mounting place of the portable computer.

The battery bay may be a multipurpose bay for receiving batteries or peripheral devices interchangeably. Alternatively, the module may be adapted for installation in a peripheral component only bay of a portable computer.

## Claims

1. A TV signal receiving module for a computer **characterised in that** the module has a hot-plug supporting interface (11a, 11b, 13, 23) for connecting it to a host computer.

2. A module according to claim 1, wherein the hot-lug supporting interface (13, 23) is a USB interface.

3. A module according to claim 1 or 2, including both digital and analogue TV signal receiving means (1).

4. A module according to claim 2, including both digital and analogue TV signal receiving means (1) and respective USB controllers (11a, 11b) for analogue and digital TV reception.

5. A module according to claim 4, including a USB hub (13), wherein the outputs of said USB controllers (11a, 11b) are connected to the USB hub (13).

6. A module according to any preceding claim, configured for installation in a component bay of a portable computer.

7. A TV signal receiving module, the TV signal receiving module comprising:
a tuner receiving an analogue signal and separating the analogue signal into a video signal and an audio signal or receiving a digital signal and converting the digital signal into a first data stream;
a video decoder converting the video signal of the analogue signal into a digital video stream;
an audio decoder converting the audio signal into a digital audio stream;
an encoding engine encoding the digital video and audio streams into a second data stream; and
a network connecting part converting a format of the first data stream or the second data stream for the portable computer.

8. The TV signal receiving module as recited in claim 7, wherein the TV signal receiving module is connected to a portable computer through a USB connector or a USB external connection terminal.

9. The TV signal receiving module as recited in claim 7, wherein the first data stream comprises an MPEG-2 transport stream and the second data stream comprises an MPEG-2 program stream.

10. The TV signal receiving module as recited in claim 8, wherein the network connecting part comprises:
a first USB controller converting the format of the first data stream for the USB port, and
a second USB controller converting the format of the second data stream for the USB port.

11. The TV signal receiving module as recited in claim 8, wherein the network connecting part further comprises:
a USB hub receiving and transmitting the converted first data stream and the second data stream to the USB connector or the USB external connection terminal.

12. The TV signal receiving module as recited in claim 7, wherein the tuner converts the video signal and the audio signal into a CVBS (composite video burst sync) signal and a 2nd IF (intermediate frequency) signal, respectively.

13. The TV signal receiving module as recited in claim 12, further comprising:
an ADC (analogue/digital converter), wherein the audio decoder converts the 2nd IF signal received from the tuner into the digital audio stream and transmits the digital audio stream to the encoding engine through the ADC.

14. The TV signal receiving module as recited in claim 13, wherein the video decoder, the audio decoder, the ADC, the encoding engine, the network connecting part are integrated circuits or chips.

15. The TV signal receiving module as recited in claim 7, further comprising:
a memory storing the digital video and audio streams of a picture to be displayed on a display part of the portable computer.

16. The TV signal receiving module as recited in claim 7, wherein the TV signal receiving module is connected to the portable computer without being inserted into a slot of a main board.

17. The TV signal receiving module as recited in claim 7, wherein the TV signal receiving module is internally mounted into a battery mounting place provided in the portable computer.

18. The TV signal receiving module as recited in claim 7, wherein a shape of the TV signal receiving module corresponds to a shape of a battery.

19. The TV signal receiving module as recited in claim 7, wherein the TV signal receiving module is smaller than a battery.

20. The TV signal receiving module as recited in claim 7, wherein the portable computer further comprises a USB port and a battery, and the TV signal receiving module further comprises:
a connector directly connected to the USB port of the portable computer that is disposed in a bottom of the portable computer and adjacent to a connector to which the battery is connected;
a power input terminal supplying electric power to the tuner, the video decoder, the encoding engine, and the network connecting part; and
an external connection terminal indirectly connected to the USB port that is disposed in a back section of the portable computer through a cable.

21. The TV signal receiving module as recited in claim 20, wherein the TV signal receiving module further comprises:
an S-video input terminal;
two stereo terminals for the audio signal;
a video input terminal, and
a TV signal receiving antenna connected to the tuner, wherein the video decoder is connected to the S-video input terminal and the video input terminal.

22. The TV signal receiving module as recited in claim 20, wherein the connector is used as a connection terminal to mount the TV signal receiving module to the portable computer.

23. The TV signal receiving module as recited in claim 20, wherein, in the portable computer, a TV module connection terminal corresponding to the connector of the TV signal receiving module is separated from and is adjacent to a battery terminal corresponding to a connector of the battery.

24. The TV signal receiving module as recited in claim 20, wherein pins of the connector are partly connected to the USB port of the portable computer and partly connected to a power pin of the portable computer to supply the electric power through the input terminal.

25. The TV signal receiving module as recited in claim 20, wherein the external connection terminal is used when the TV signal receiving module is connected to the USB port of the portable computer through the cable, allowing the portable computer to receive the electric power from the battery or from a commercial AC power source, where the TV signal receiving module receives the electric power from the commercial AC power source through the power input terminal.

26. The TV signal receiving module as recited in claim 7, wherein the encoding engine is an MPEG (moving picture experts group)-2 encoder.

27. The TV signal receiving module as recited in claim 7, wherein the tuner is an ATSC/NTSC compatible tuner.

28. A TV signal receiving module for a portable computer having a USB port and a battery mounting place, comprising:
an external shape that corresponds to a shape of a battery to be mounted to the battery mounting place of the portable computer.

29. The TV signal receiving module as recited in claim 28, further comprising:
a tuner receiving an analogue TV signal and a digital TV signal;
a video decoder receiving and processing a video signal divided from the analogue TV signal so as to display a picture based on the video signal;
an encoding engine encoding the video signal processed in the video decoder having a predetermined format; and
a network connecting part controlling the digital TV signal and the encoded video signal to be transmitted to the portable computer.

30. The TV signal receiving module as recited in claim 29, further comprising:
a connector directly connected to the USB port of the portable computer that is disposed in a bottom of the portable computer and adjacent to a connector to which the battery is connected;
a power input terminal supplying electric power to the tuner, the video decoder, the encoding engine, and the network connection part; and
an external connection terminal indirectly connected to the USB port that is disposed in a back section of the portable computer through a cable.

31. An operating method of a TV signal receiving module connected to a portable computer through a USB (universal serial bus) port, the operating method comprising:
receiving an analogue or a digital signal;
separating the analogue signal into a video signal and an audio signal; converting the digital signal into a first data stream;
converting the video signal and the audio signal into a digital video stream and a digital audio stream, respectively;
encoding the digital video and audio streams into a second data stream; and converting a format of the first data stream or the second data stream for the portable computer.

32. The method of the TV signal receiving module as recited in claim 31, wherein the first data stream comprises an MPEG-2 transport stream and the second data stream comprises an MPEG-2 program stream.

33. The method of the TV signal receiving module as recited in claim 31, wherein because the TV signal receiving module is connected to the portable computer, not through a PCI interface, but through the USB port, further comprising:
recognizing the TV signal receiving module while the portable computer operates.

34. A portable computer having a TV signal receiving module which includes
a tuner to receive an analogue TV signal and a digital TV signal;
a video decoder to receive and process a video signal divided from the analogue TV signal received by the tuner so as to display a picture based on the video signal;
an encoding engine to encode the video signal processed in the video decoder having a predetermined format;
a memory to store the encoded video signal having the predetermined format; and
a network connecting part to control the digital TV signal and the encoded video signal to be transmitted to the portable computer.

35. The TV signal receiving module as recited in claim 34, wherein the portable computer further comprises:
a TV module connection terminal to which the TV signal receiving module is connected, wherein the TV module connection terminal is separated from and adjacent to a battery terminal to which the battery is connected.

36. The TV signal receiving module as recited in claim 34, wherein the TV signal receiving module is connected to the portable computer through the TV module connection terminal to transmit the TV signal to the portable computer.
